(19) Europäisches Patentamt
European Patent Office
Office européen des brevets

(11) Numéro de publication : **0 639 604 A1**

# (12) DEMANDE DE BREVET EUROPEEN

(21) Numéro de dépôt : **94401803.5**

(51) Int. Cl.[6] : **C08G 69/44**

(22) Date de dépôt : **04.08.94**

(30) Priorité : **20.08.93 FR 9310140**

(43) Date de publication de la demande :
**22.02.95 Bulletin 95/08**

(84) Etats contractants désignés :
**AT BE CH DE DK ES FR GB GR IE IT LI LU NL PT SE**

(71) Demandeur : **ELF ATOCHEM S.A.**
**4 & 8, Cours Michelet**
**La Défense 10**
**F-92800 Puteaux (FR)**

(72) Inventeur : **Judas, Didier**
**11, rue Beudant**
**F-75017 Paris (FR)**
Inventeur : **Sage, Jean-Marc**
**10, rue de la Commune de Paris**
**F-69600 Oullins (FR)**

## (54) Polymères comprenant des séquences polyéther et des séquences polyamides.

(57) L'invention concerne des copolymères séquencés comprenant des blocs polyéther et des blocs polyamides.

Ils peuvent être formés soit par la condensation de :
— polyamides à extrémités carboxyliques,
— polyéthers diols,
— polyéther diamines, soit par la condensation de :
— lactames (ou amino acides, ou diacides et diamines) et le diacide limitateur de chaîne,
— polyéther diols,
— polyéther diamines.

EP 0 639 604 A1

Jouve, 18, rue Saint-Denis, 75001 PARIS

La présente invention concerne des polymères séquencés connus sous le nom de polyéther ester amide et comprenant des séquences polyéther et des séquences polyamides.

On connaît les polyéther ester amide, par exemple obtenus selon les brevets FR 2273021 et FR 2401947 au nom de la demanderesse. Ces polymères sont obtenus par réaction à l'état fondu d'un oligomère polyamide diacide avec un oligomère polyéther diol sous vide poussé en présence de catalyseurs métalliques.

Dans le brevet FR 2384810, on décrit des polyéther ester amide obtenus par polymérisation sous pression autogène à des températures comprises entre 230 et 300° C d'un mélange constitué:

d'un ou plusieurs monomères de polyamide,

d'un oligomère polyéther diol,

et d'au moins un diacide en présence d'eau.

Dans le brevet japonais 7007559, on décrit des polymères comportant des séquences polyéthers et polyamides obtenus par réaction d'un oligomère polyamide diacide avec un oligomère polyéther diamine à l'état fondu.

Dans les brevets US 4 345 064, 4 349 661 et 4 345 052, on décrit des procédés de synthèse de polyéther (ester) amides obtenus à partir des monomères polyamide d'un diacide et d'un oligomère polyéther diol ou bien d'un oligomère polyéther diamine.

Bien que l'emploi d'un mélange de polyéther diamine et diol soit prévu dans le texte de ces brevets aucun intérêt spécifique à l'emploi simultané de ces deux constituants n'est mentionné, de même aucun exemple de poly éther ester amide renfermant à la fois des motifs issus d'un oligomère polyéther dio et des motifs issus d'un oligomère polyéther diamine n'est donné.

Les polyéther ester amide selon l'invention comprennent des entités répétitives suivantes :

A

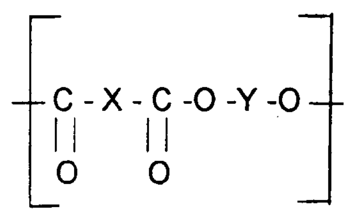

B

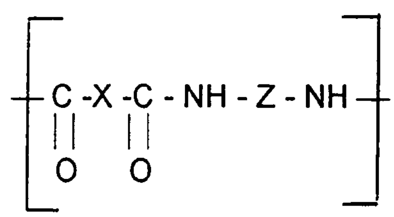

dans lesquelles :

X représente le reste d'un oligomère polyamide diacide de Mn comprise entre 300 et 8 000 et de préférence entre 500 et 5 000.

Y représente le reste d'un polyétherdiol de Mn comprise entre 200 et 5 000 et de préférence entre 200 et 3 000.

Z représente le reste d'un polyétherdiamine de Mn compris entre 200 et 5 000 et de préférence entre 200 et 3 000.

L'oligomère polyamide diacide possède, de par la nature des réactions de polycondensation permettant de l'obtenir, une répartition statistique dans sa composition et dans sa polydispersité et est composé de motifs formant polyamide issus de la polycondensation des lactames ou aminoacides. On citera en exemple le caprolactame ou le dodécalactame, des couples diacide/diamine, on citera en exemple l'hexaméthylène diamine et l'acide adipique ou d'un mélange de ces motifs en présence d'un agent diacide limitateur de chaîne. On peut aussi polymériser des lactames et/ou des aminoacides et éventuellement jusqu'à 50 % en poids d'un ou plusieurs diacides et d'une ou plusieurs diamines en présence d'un limitateur de chaîne diacide.

Parmi les limitateurs de chaîne diacide, on citera tout particulièrement les acides adipique/téréphtalique et l'acide dodécanedioique.

A titre d'exemple de polyétherdiols, on peut citer le polyéthylène glycol (PEG) le polypropylène glycol (PPG), le polytétraméthylène glycol (PTMG), ainsi que le mélange de ce polyéther diols.

A titre d'exemple de polyétherdiamine, on peut citer les polyétherdiamine obtenus par modification des polyéther diols précédemment cités. Ces modifications chimiques peuvent consister, par exemple, en la transformation du groupement hydroxyle terminal du polyéther en groupement amine par des réactions d'ammination ou bien en la transformation du groupement terminal hydroxyle des polyétherdiols par cyanoéthylation puis réduction en groupement 3-aminopropyléther de formule $-O-CH_2-CH_2-CH_2-NH_2$.

La proportion massique des entités Z issues de la condensation du polyéther diamine par rapport à la quantité totale des entités issues des polyétherdiol et diamine, soit Z / (Z + Y) est avantageusement comprise entre 1 et 50 % et de préférence entre 5 et 30 % et de préférence entre 10 et 20 %.

La proportion en masse de l'oligomère polyamide diacide peut être comprise entre 10 et 99 % de préférence entre 20 et 95 % et de préférence entre 40 et 90 % par rapport au polymère.

On sait que les oligomères polyéther sont sensibles à la dégradation thermique et tout particulièrement dans le domaine de température utilisé couramment pour la synthèse des copolyéther ester amide, c'est-à-dire entre 200 et 400° C (Journal of Polymer Science, Vol XXXVI p. 183-194, 1959 par S.L. MADORSKY et S. STRAUSS).

Il est donc très avantageux de pouvoir obtenir des polyéther ester amide dont la réaction des oligomères polyamide diacide et des oligomères polyéther composants ces polymères conduise à des temps de polycondensation réduits afin d'éviter les réactions de dégradation des polyétherdiols ou diamines, ces réactions de dégradations entraînant une coloration des produits et limitant les masses moléculaires obtenues. Les polymères de l'invention ont des masses molaires suffisamment élevées pour présenter de bonnes propriétés mécaniques.

Les polymères de l'invention contiennent très peu de produits de dégradation donc ils n'exsudent pas. On peut mesurer les produits de dégradation restant dans le polymère en faisant une extraction au méthanol.

Ainsi, par exemple, il est difficile d'obtenir des polyéther ester amide issus de la condensation des oligomères du polypropylèneglycol en raison de leur faible réactivité et de leur sensibilité à la dégradation thermique (G. DELLENS, P. FOY, E. MARECHAL, European Polymer Journal Vol. 13 p. 343-351).

Nous avons trouvé que la composition particulière et nouvelle des copolyéther ester amide selon l'invention permettait de diminuer de façon très sensible les temps de réaction nécessaires à l'obtention de polymère de poids moléculaire élevé. La diminution de cette durée de polycondensation permet de limiter les réactions de dégradation des segments ou des oligomères polyéthers entrant dans la composition des polyéther (ester) amide obtenus selon les procédés connus et déjà mentionnés comme, par exemple, dans les brevets FR 2273021 ou FR 2401947 et la demande française no. 91 03175 du 15 mars 1991.

Les polyéther ester amides selon l'invention peuvent être préparés par réaction à l'état fondu entre un oligoamide diacide A, un oligomère polyéther B et un oligomère polyéther diamine C, les proportions relatives de l'oligomère polyamide diacide A et des oligomères polyéther B et C respectant la relation :

$$0.85 < COOH/(OH + NH_2) < 1.15$$

de préférence

$$0.95 < COOH/(OH + NH_2) < 1.05$$

COOH représentant la concentration molaire des groupements carboxyliques issus de l'oligomère polyamide diacide.

OH représentant la concentration molaire des groupements hydroxyles issus de l'oligomère polyéther diol.

$NH_2$ représentant la concentration molaire des groupements amines issus de l'oligomère polyéther diamine.

On effectue en général la réaction sous pression réduite en présence d'au moins un catalyseur d'estérification tel que, par exemple, les alcoxydes d'aluminium, étain, antimoine, germanium, zirconium et de titane, l'oxyde d'antimoine, le laurate d'hydroxyoxyde d'étain, seuls ou en mélange et/ou en présence notamment d'acide phosphorique. L'addition du catalyseur peut être effectuée en une ou plusieurs étapes avec éventuellement des catalyseurs différents suivant le moment de l'introduction au cours du procédé.

Les températures de réactions usuelles sont comprises entre 200 et 400° C et de préférence entre 200 et 300° C de préférence entre 220 et 270° C.

Une variante du procédé consiste à faire réagir ensemble tous les constituants polyéther et polyamide, c'est-à-dire, l'oligomère polyéther diol, l'oligomère polyéther diamine, les monomères formant le motif polyamide, c'est-à-dire, les lactames, aminoacides, diacides et diamines et le diacide limitateur de chaîne.

En ce cas, une première étape peut être effectuée sous pression de 1 à 50 bars et des températures de 200 à 400° C de préférence de 220 à 270° C afin notamment d'ouvrir les composants lactames formant le motif polyamide.

Les polyéther ester amide selon l'invention peuvent être mis en oeuvre tels quels et conviennent pour la réalisation d'objet moulés, extrudés, de films, de gaines, de matériaux composites tels que film multicouches. Ils peuvent également être mélangés avec d'autres polymères et en particulier avec les polyamides. On peut également leur ajouter des additifs tels que stabilisant chaleur, antioxydant, colorants, charges minérales ou

organiques diverses.

Les exemples suivant illustrent l'invention sans pour autant la limiter.

Les viscosités inhérentes sont déterminées à 0,5 g/dl dans le métacrésol à 25°C. Elles sont exprimées en dl/g.

Les températures de fusion sont mesurées entre 20 et 250° C sur la deuxième chauffe avec un appareil DSC-4 de la Société PERKIN-ELMER.

Le début de montée en viscosité du polymère lors de réaction de synthèse est repéré par l'augmentation franche du couple transmis à l'arbre de l'agitateur ou bien par l'augmentation de la puissance transmise à l'arbre d'agitation à vitesse de rotation constante.

***Exemple 1***

Dans un réacteur de verre de 300 $cm^3$ muni d'une arrivée d'azote et muni d'un agitateur de type ancre équipé d'un moteur d'agitation mécanique permettant de mesurer le couple, on introduit 33,81 g d'un oligomère PA6 diacide de Mn 2300 et composé des motifs issus du caprolactame et du limitateur de chaîne acide dodécanedioique, 8.1 g d'un oligomère polyéther de polypropylène glycol de Mn égale à 600 (PLURIOL, P. 600de la société BASF), 0.9 g d'un oligomère polyoxypropylène diamine de Mn 2000 (JEFFAMINE D2000 de la société TEXACO) soit 10 % en masse par rapport à la phase polyéther, 0.34 g de catalyseur Zr (Obu)4, soit 0,79 % en masse par rapport à la charge totale et 0.064 g d'IRGANOX 1010 (antioxydant de la société CIBA GEIGY), soit 0.15 % en poids par rapport à la charge totale du réacteur. Le réacteur sous azote est plongé dans un bain d'huile maintenu à 240° C, l'agitation est mise en route à 250 tours/minutes. On effectue ensuite progressivement la mise sous vide du réacteur jusqu'à un vide de 0,5 mmHg et l'on observe ensuite l'évolution du couple. On note le temps à partir duquel on observe une augmentation franche du couple, c'est-à-dire 60 mn (noté T1 dans le tableau 1), on continue la réaction pendant encore 3 heures. Le polymère obtenu possède une viscosité inhérente de 1.01 et une température de fusion de 208° C.

***Exemples 2 à 4***

On opère de la même manière que dans l'exemple 1 avec les mêmes oligomères polyéthers ou polyamide et avec des pourcentages massiques (par rapport à la masse de polyéther diamine et de polyéther diol) de PPG diamine indiqués dans le tableau 1 en respectant les concentrations molaires des extrémités fonctionnelles des oligomères engagés satisfaisant la relation $COOH/(OH + NH_2) = 0.95$. Les temps T1 d'observation de la montée en viscosité du polymère sont reportés dans le tableau 1.

***Contre exemples 5 et 6***

On opère de manière identique aux exemples 1 à 4. Les proportions sont indiqués dans le tableau 1.

***Exemple 7***

Dans un autoclave en acier inoxydable de 61 on introduit 1 209,7 g de l'oligomère PA6 diacide utilisé dans les exemples précédents 232.3 g de polyoxypropylène glycol de Mn 600, 58,1 g de polyoxypropylènediamine de Mn 400 (JEFFAMINE D 400 de la société TEXACO) et 2,25 g (soit 0.15 %) d'antioxydant IRGANOX 1010. Le réacteur est maintenu sous azote et porté à la température de réaction soit 240° C pendant une demi-heure sous agitation (60 tours/minute). On procède ensuite à la mise sous vide du réacteur jusqu'à une pression de 0,5 mmHg et l'on introduit 12 g de catalyseur Zr (OBu) 4. On observe au bout de 30 minutes après la mise sous vide la montée en viscosité du polymère à travers la puissance électrique transmise à l'arbre d'agitation. On suit ensuite l'évolution du couple en diminuant l'agitation jusqu'à 10 tours/minutes. La réaction est arrêtée 30 minutes après, la puissance affichée à 10 tours seconde est notée à 20 % (en % d'une échelle arbitraire prise en référence). Le réacteur est alors remis sous azote à pression atmosphérique et le polymère est extrudé.

***Contre-exemple 8***

On opère de la même manière que dans l'exemple 7 avec les charges suivantes, 795,5 g de l'oligomère PA6 diacide, 210,35 g de l'oligomère polyoxypropylène glycol, 8 g de catalyseur (Zr(OBu)4) et 1,5 g d'antioxydant IRGANOX 1010.

Le début de montée en viscosité du polymère n'est observé qu'au bout de 100 minutes après la mise sous

vide du réacteur, 110 minutes après ce début de montée en viscosité, on obtient seulement une valeur de 10 % de la puissance affichée à 10 tours minute. La réaction est arrêtée ensuite car on ne note plus d'évolution significative.

Le tableau 1 détaille la nature des exemples 1 à 8.

Tableau 1.

| Exemple | PA diacide (Nature/Mn) | Limitateur de chaîne (1) | PPG | Jeffamine | Jeffamine / [PPG + Jeffamine] (% en poids) | T1 Mn |
|---|---|---|---|---|---|---|
| 1 | 6/2300 | ADD | 600 | D 2000 | 10 | 60 |
| 2 | " | " | " | " | 20 | 40 |
| 3 | " | " | " | " | 30 | 90 |
| 4 | " | " | " | " | 50 | 100 |
| 5 | " | " | " | - | 0 | 110 |
| 6 | " | " | - | D 2000 | 100 | 120 |
| 7 | " | " | " | D 400 | 20 | - |
| 8 | " | " | " | - | 100 | - |

*(1) Acide dodécanedioïque*

***Exemple 9***

Dans un réacteur de verre de 300 $cm^3$ muni d'une arrivée d'azote et muni d'un agitateur de type ancre équipé d'un moteur d'agitation mécanique permettant de mesurer le couple, on introduit 30,31 g d'un oligomère de PA 6 diacide de Mn égale à 1500 et composé des motifs issus du caprolactame et du limitateur de chaîne acide adipique, 16,17 g d'un oligomère polyéther de polyéthylène glycol de Mn égale à 1490 (PEG de la société BASF), 3,43 g d'un oligomère de polyoxypropylène diamine de Mn égale à 410 (Jeffamine D 400 de la société TEXACO), soit 17,5% en poids par rapport à la charge totale en polyéther, 0,25 g de catalyseur $Zr(OBu)_4$ soit 0,5% en masse par rapport à la charge totale. Le réacteur sous azote est plongé dans un bain d'huile maintenu à 240°C, l'agitation est mise en route à 250 tours/minutes. On effectue progressivement la mise sous vide du réacteur jusqu'à un vide de 0,5 mm Hg et l'on observe ensuite l'évolution du couple. Le temps à partir duquel on observe une augmentation franche du couple est de 55 minutes. La réaction est poursuivie pendant 17 minutes. Le polymère obtenu possède une viscosité inhérente de 0,99 et une température de fusion de 195,5°C.

***Contre Exemple 10***

On opère de la même manière que dans l'exemple 9 en introduisant dans le réacteur 25,00 g du même oligomère de PA 6 diacide, 23,58 g du même polyéthylène glycol et 0,24 g de $Zr(OBu)_4$. Le temps à partir duquel on observe une augmentation franche du couple est de 70 minutes. La réaction est poursuivie pendant 10 minutes. Le polymère obtenu possède une viscosité inhérente de 1,05 et une température de fusion de 202,5°C.

***Exemple 11***

Dans le réacteur décrit dans l'exemple 9, on introduit 27,36 g d'un oligomère de PA 12 diacide de Mn égale à 1500 et composé des motifs issus du dodécalactame et du limitateur de chaîne acide adipique, 21,22 g d'un oligomère polyéther de polyéthylène glycol de Mn égale à 1490 (PEG de la société BASF), 1,46 g d'un oligomère de polyoxypropylène diamine de Mn égale à 410 (Jeffamine D 400 de la société TEXACO), soit 6.44 % en poids par rapport à la charge totale en polyéther, 0,25 g de catalyseur $Zr(OBu)_4$ soit 0,5% en masse par rapport à la charge totale. Le réacteur sous azote est plongé dans un bain d'huile maintenu à 240°C, l'agitation

est mise en route à 250 tours/minutes. On effectue progressivement la mise sous vide du réacteur jusqu'à un vide de 0,5 mm Hg et l'on observe ensuite l'évolution du couple. Le temps à partir duquel on observe une augmentation franche du couple est de 25 minutes. La réaction est poursuivie pendant 5 minutes. Le polymère obtenu possède une viscosité inhérente de 1,18 et une température de fusion de 156,1°C.

***Contre Exemple 12***

On opère de la même manière que dans l'exemple 9 en introduisant dans le réacteur 25,00 g du même oligomère de PA 6 diacide et 24,23 g du même polyéthylène glycol et 0,25 g de $Zr(OBu)_4$. Le temps à partir duquel on observe une augmentation franche du couple est de 30 minutes. La réaction est poursuivie pendant 5 minutes. Le polymère obtenu possède une viscosité inhérente de 1,18 et une température de fusion de 156,8°C.

***Exemple 13***

Dans un autoclave en acier inoxydable de 6 litres on introduit 1164,8 g d'un oligomère de PA 6 diacide de Mn égale à 2500 et composé des motifs issus du caprolactame et du limitateur de chaîne acide adipique, 268,16 g d'un oligomère polyéther de polypropylène glycol de Mn égale à 900, 67,04 g d'un oligomère de polyoxypropylène diamine de Mn égale à 410 (Jeffamine D 400 de la société TEXACO), soit 20 % en poids par rapport à la charge totale en polyéther et 2.25 g (soit 0.15%) d'antioxydant IRGANOX 1010. Le réacteur est maintenu pendant sous azote et porté à la température de réaction soit 240°C pendant une demi-heure sous agitation (60 tours/minute). On procède ensuite à la mise sous vide du réacteur jusqu'à une pression de 0,5 mm Hg et l'on introduit 15 g de catalyseur $Zr(OBu)_4$. On observe au bout de 2 h 20 minutes après la mise sous vide la montée en viscosité du polymère à travers la puissance électrique transmise à l'arbre d'agitation. On suit ensuite l'évolution du couple en diminuant l'agitation jusqu'à 10 tours/minutes. La réaction est arrêtée 1 h 40 minutes après, la puissance affichée à 10 tours seconde est notée 20% (en % échelle arbitraire prise en référence). Le réacteur est alors remis sous azote à pression atmosphérique et le polymère est extrudé. Le polymère obtenu possède une viscosité inhérente de 0,93 et une température de fusion de 208,3°C.

***Contre Exemple 14***

On opère de la même manière que dans l'exemple 13 avec les charges suivantes, 1102,09 g du même oligomère de PA 6 diacide, 392,96 g du même oligomère de polypropylène glycol, 2,24 g d'IRGANOX 1010 et 15 g de catalyseur $Zr(OBu)_4$.

Le début de montée en viscosité du polymère n'est observé qu'au bout de 4 heures après la mise sous vide du réacteur. 2 heures après ce début de montée en viscosité, on obtient seulement une valeur de 10% de la puissance affichée à 10 tours minutes. La réaction est arrêtée ensuite car on ne note plus d'évolution significative. Le polymère obtenu possède une viscosité inhérente de 0,78 et une température de fusion de 211.7°C.

***Exemple 15***

Dans le réacteur décrit dans l'exemple 9, on introduit 46,27 g d'un oligomère de PA 6 diacide de Mn égale à 2500 et composé des motifs issus du caprolactame et du limitateur de chaîne acide adipique, 2,00 g d'un oligomère de polyoxypropylène diamine de Mn égale à 470 (Jeffamine D 400 de la société TEXACO). Le réacteur sous azote est plongé dans un bain d'huile maintenu à 240°C, l'agitation est mise en route à 250 tours/minutes. Après 30 minutes on introduit 8,02 g d'un oligomère polyéther de polypropylène glycol de Mn égale à 600 et on laisse la réaction se poursuivre pendant 30 minutes. Dans ces conditions la teneur en oligomère polyxypropylène diamine est de 19,9% en poids par rapport à la charge en polyéther On effectue alors progressivement la mise sous vide du réacteur jusqu'à un vide de 0,5 mm Hg et l'on introduit 0,28 g de catalyseur $Zr(OBu)_4$ soit 0,5% en poids par rapport à la charge du réacteur. On observe ensuite l'évolution du couple. Une augmentation franche du couple est observée 100 minutes après l'introduction du réacteur dans le bain d'huile. L'augmentation de la viscosité du milieu réactionnel nécessite une diminution de la vitesse d'agitation successivement à 125, 60 et 15 tours minutes. Après 180 minutes à 240°C, la réaction est arrêtée. Le réacteur est remis à pression atmosphérique sous courant d'azote. Le polymère obtenu possède une viscosité inhérente de 1,02.

La figure 1 permet de visualiser l'évolution du couple et de la vitesse d'agitation en fonction de la durée de la réaction.

***Contre Exemple 16***

On opère de la même manière que dans l'exemple 15 en remplaçant l'oligomère de polyoxypropylène diamine de Mn égale à 470 (Jeffamine D 400 de la société TEXACO) par un oligomère de polytétraméthylène glycol de Mn égale à 650 (19,9% en poids de la charge en polyéther). Les charges en matières premières sont les suivantes:

- 45,69 g de l'oligomère de PA 6 diacide de Mn égale à 2500,
- 2,12 g d'un oligomère de polytétraméthylène glycol de Mn égale à 650,
- 8,49 g de l'oligomère polyéther de polypropylène glycol de Mn égale à 600,
- 0,28 g de catalyseur $Zr(OBu)_4$.

Une augmentation franche du couple est observée 200 minutes après l'introduction du réacteur dans le bain d'huile. L'augmentation de la viscosité du milieu réactionnel nécessite une diminution de la vitesse d'agitation successivement à 125, 60 tours minutes. Après 360 minutes à 240°C, la réaction est arrêtée. le réacteur est remis à pression atmosphérique sous courant d'azote. Le polymère obtenu possède une viscosité inhérente de 0,81.

La figure 2 permet de visualiser l'évolution du couple et de la vitesse d'agitation en fonction de la durée de la réaction.

Le tableau 2 résume les conditions opératoires des exemples 9 à 16.

Tableau 2.

| Exemple<br>**Contre Exemple** | PA diacide (Nature / Mn) | Limitateur de chaîne (1) | Polyéther (s) dihydroxy (Nature / Mn) | Polyéther diamine (Jeffamine) | [Jeffamine] / [Polyéther + Jeffamine] (% en poids) |
|---|---|---|---|---|---|
| 9 | 6 / 1500 | AA | PEG / 1490 | D 400 | 17.5 |
| **10** | 6 / 1500 | AA | PEG / 1490 | - | 0 |
| 11 | 12 / 1460 | AA | PEG / 1490 | D 400 | 6.44 |
| **12** | 12 / 1460 | AA | PEG / 1490 | - | 0 |
| 13 | 6 / 2500 | AA | PPG / 900 | D 400 | 20 |
| **14** | 6 / 2500 | AA | PPG / 900 | - | 0 |
| 15 | 6 / 2500 | AA | PPG / 900 | D 400 | 20 |
| **16** | 6 / 2500 | AA | PPG / 900<br>PTMG / 650 | | 0 (2) |

*(1) Acide adipique*
*(2) Mélange PPG/PTMG (80/20 en poids)*

## Revendications

1. Polyéther ester amides caractérisés en ce qu'ils comprennent des entités répétitives suivantes :

A 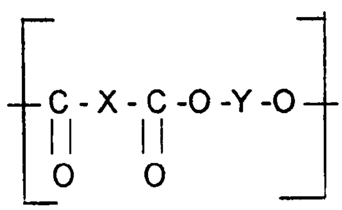

B

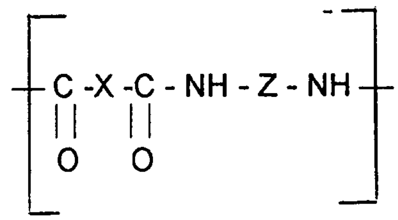

dans lesquelles :
X représente le reste d'un oligomère polyamide diacide de Mn comprise entre 300 et 8 000 et de préférence entre 500 et 5 000.
Y représente le reste d'un polyétherdiol de Mn comprise entre 200 et 5 000 et de préférence entre 200 et 3 000.
Z représente le reste d'un polyétherdiamine de Mn compris entre 200 et 5 000 et de préférence entre 200 et 3 000,

2. Polymère selon la revendication 1 caractérisé en ce que la proportion massique des entités Z issues de la condensation du polyéther diamine par rapport à la quantité totale des entités issues des polyétherdiol et diamine, soit Z / (Z + Y) est comprise entre 1 et 50 % et de préférence entre 5 et 30 %.

3. Polymère selon la revendication 1 ou 2 caractérisé en ce que la proportion en masse de l'oligomère polyamide diacide est comprise entre 10 et 99 % de préférence entre 20 et 95 % et de préférence entre 40 et 90 % par rapport au polymère.

4. Polymère selon l'une des revendications 1 à 3 caractérisé en ce que la proportion massique des entités Z issues de la condensation du polyéther diamine par rapport à la quantité totale des entités issues des polyétherdiols et diamines, soit Z / (Z + Y) est comprise entre 10 et 20 %.
- la proportion en masse de l'oligomère polyamide diacide est comprise de préférence entre 40 et 90 % par rapport au polymère.

5. Polymère selon les revendications 1 à 4 caractérisé en ce que les oligomères polyamides diacide sont obtenus par polymérisation de lactames et/ou aminoacides et éventuellement jusqu'à 50 % en poids d'un ou plusieurs diacides et d'une ou plusieurs diamines en présence d'un limitateur de chaîne diacide et dérivant de préférence de caprolactame et l'acide adipique ou dodécanedioique.

6. Polymères selon les revendications 1 à 5 caractérisés en ce que les polyéther diols et diamines sont choisis parmi le PEG, le PPG ou le PTMG ou leurs dérivés diaminés.

7. Polymère selon les revendicationsl à 6 caractérisé en ce que le polyéther diol est le polypropylène glycol.

8. Polymère selon les revendications 1 à 7 caractérisé en ce que le polyéther diamine est le polyoxypropylène diamine.

9. Procédé de préparation des polyétheresteramides des revendications 1 à 8 caractérisé en ce que on fait réagir à l'état fondu l'oligomère polyamide diacide et les oligomères polyétherdiol et polyéther diamine en présence d'au moins un catalyseur d'estérification sous pression réduite.

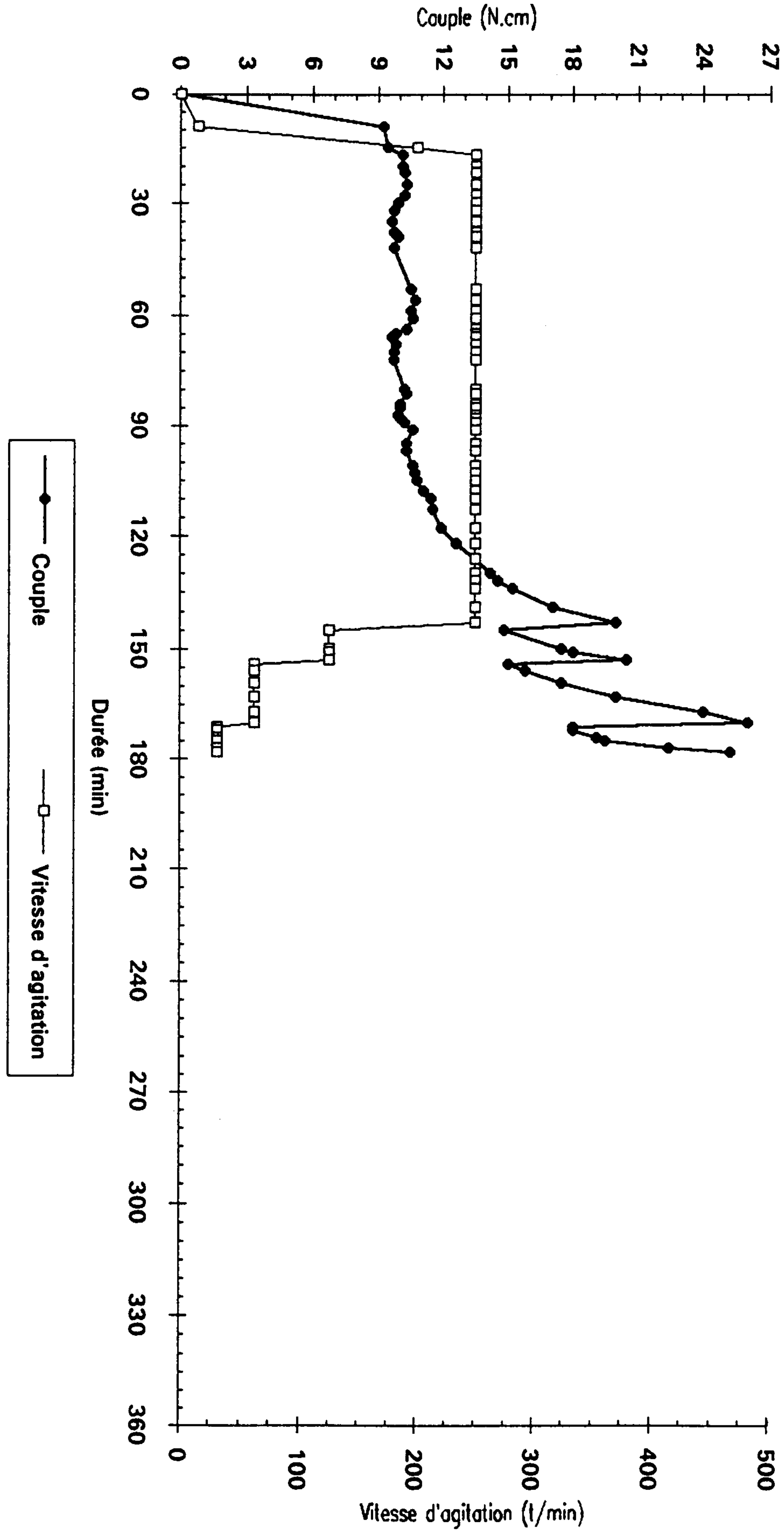
Couple (N.cm)
0
3
6
9
12
15
18
21
24
27
Durée (min)
0
30
60
90
120
150
180
210
240
270
300
330
360
Vitesse d'agitation (t/min)
0
100
200
300
400
500
Couple
Vitesse d'agitation

Figure 1

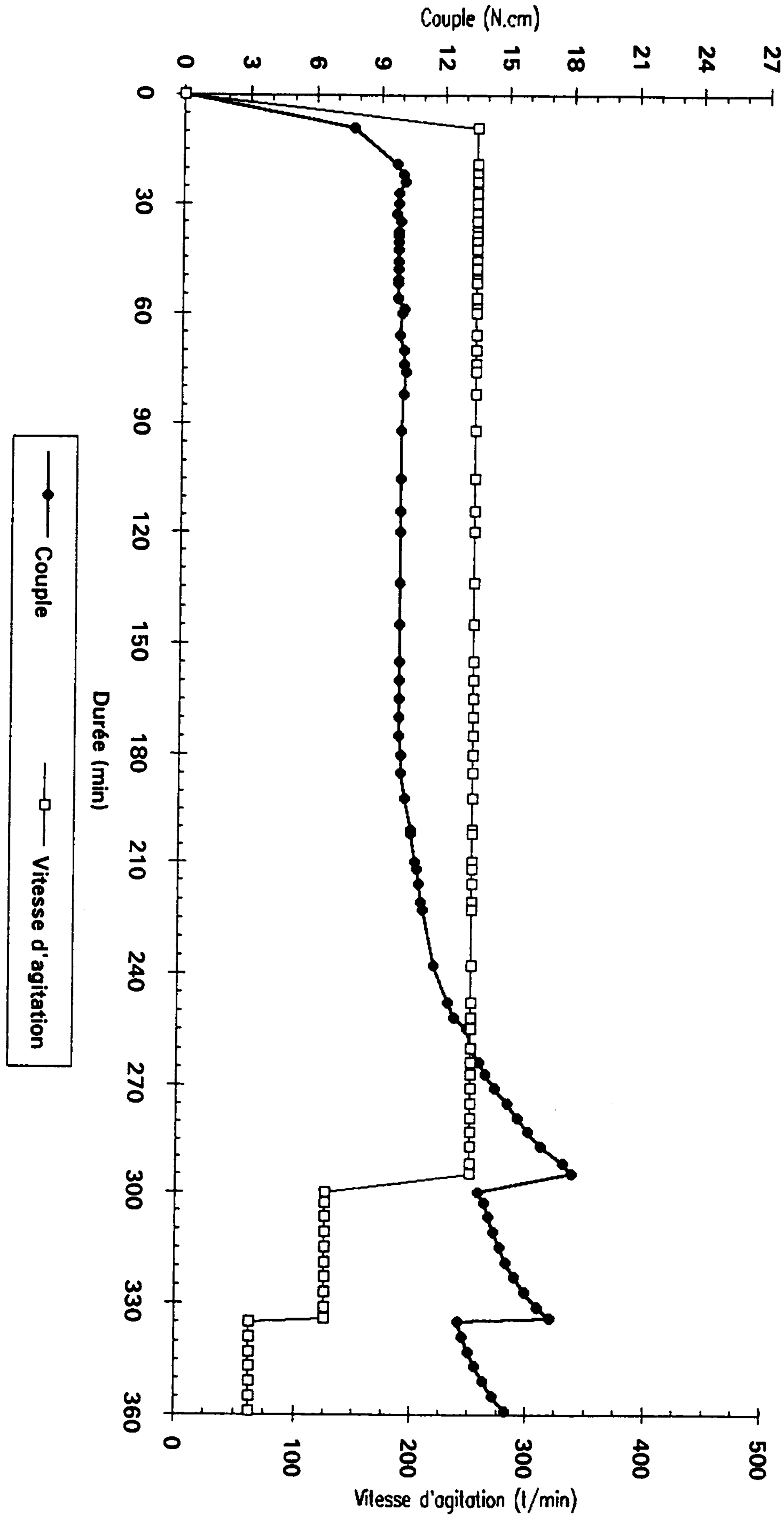
Couple (N.cm)
0
3
6
9
12
15
18
21
24
27
Durée (min)
0
30
60
90
120
150
180
210
240
270
300
330
360
Vitesse d'agitation (t/min)
0
100
200
300
400
500
Couple
Vitesse d'agitation

Figure 2

Office européen des brevets

# RAPPORT DE RECHERCHE EUROPEENNE

Numero de la demande
EP 94 40 1803

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 090 607 (ATO CHIMIE)<br>--- | | C08G69/44 |
| A,D | DATABASE WPI<br>Section Ch,<br>Derwent Publications Ltd., London, GB;<br>Class A24, AN 70-19846R<br>& JP-B-45 007 559 (TORAY IND INC)<br>* abrégé *<br>--- | | |
| A<br>D,A | EP-A-0 025 828 (HULS)<br>& US-A-4 345 064 (S. MUMCU)<br>--- | | |
| A<br>A,D | EP-A-0 025 487 (HULS)<br>& US-A-4 349 661 (S. MUMCU)<br>--- | | |
| A<br>D,A | EP-A-0 023 956 (HULS)<br>& US-A-435 052 (S. MUMCU)<br>----- | | |
| | | | DOMAINES TECHNIQUES RECHERCHES (Int.Cl.6) |
| | | | C08G |

Le présent rapport a été établi pour toutes les revendications

| Lieu de la recherche | Date d'achèvement de la recherche | Examinateur |
|---|---|---|
| LA HAYE | 4 Octobre 1994 | Leroy, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)